# EUROPÄISCHE PATENTSCHRIFT

(11) **EP 1 342 649 B1**
(45) Veröffentlichungstag und Bekanntmachung des Hinweises auf die Patenterteilung: **15.11.2006**
(21) Anmeldenummer: 03004379.8
(22) Anmeldetag: 03.03.2003
(51) Int. Cl.: B62D 25/06, B62D 29/04, B62D 65/00

(54) **Karosserieteil für Kraftfahrzeuge und Verfahren zu dessen Herstellung**
Body part for motor vehicles and its production method
Pièce de carosserie pour véhicules automobiles et sa méthode de production

(30) Priorität: 07.03.2002 DE 10210141
(43) Veröffentlichungstag der Anmeldung: 10.09.2003
(73) Patentinhaber: ArvinMeritor GmbH, 63128 Dietzenbach (DE)
(72) Erfinder: Hock, Daniel, 63867 Johannesberg (DE); Ludwig, Matthias, 38159 Vechelde (DE); Lutz, Marcus, 38518 Gifhorn (DE); Niebuhr, Frank, 38518 Wilsche (DE)
(74) Vertreter: Sties, Jochen

(56) Entgegenhaltungen:
- DE-A- 3 150 027
- DE-A- 10 028 320
- DE-A- 19 947 776
- US-A- 4 475 765

## Beschreibung

Die Erfindung betrifft ein Karosserieteil für ein Fahrzeug gemäß dem Oberbegriff des Anspruchs 1 sowie ein Verfahren zur Herstellung eines solchen Karosserieteils.

Wenn an einem Karosserieteil eines Fahrzeugs Anbauteile befestigt werden sollen, beispielsweise eine Dachreling an einem Dachmodul oder auch ein zweites Karosserieteil, sind entweder zusätzliche Befestigungsbauteile sowie üblicherweise Löcher in dem Karosserieteil oder aber besondere Vorkehrungen zur Verbindung der beiden Karosserieteile notwendig. Dies ist sowohl hinsichtlich der Kosten als auch des Aufwandes nachteilig. Auch müssen geringe Toleranzen eingehalten werden, damit es nicht zu unerwünscht großen Spaltmaßen kommt.

In der US-A-4 475 765, die den nächstkommenden Stand der Technik darstellt, ist ein Fahrzeugdach mit einer zumindest teilweise verformbaren Außenhaut und einer geschäumten Innenschicht gezeigt, wobei die Außenhaut eine Vertiefung mit einem Loch aufweist, durch das eine Schraube gesteckt ist. Zur Befestigung des Fahrzeugdachs an einem starren Fahrzeugrahmen sind an geeigneten Stellen mehrere solcher Schrauben in den Fahrzeugrahmen eingedreht, um eine insgesamt vibrationsabsorbierende und dauerelastische Verbindung zu erzielen. Zusätzlich weisen die Schrauben zur Befestigung eines Dachlastträgers ein Innengewinde auf.

Die DE 199 47 776 A offenbart eine Halteeinrichtung für einen Dachlastträger, wobei ein Montageteil in einer Vertiefung eines einschaligen Blechdachs befestigt ist und Haltemittel zur Montage des Dachlastträgers aufweist.

Die Aufgabe der Erfindung besteht darin, ein Karosserieteil zu schaffen, das mit geringem Aufwand und mit optisch ansprechenden Spaltmaßen ermöglicht, Anbauteile zu montieren.

Zu diesem Zweck sind erfindungsgemäß bei einem Karosserieteil der eingangs genannten Art die Merkmale des kennzeichnenden Teils des Anspruchs 1 vorgesehen. Die Erfindung beruht auf dem Grundgedanken, das Montageteil mittels der Innenschicht in der Vertiefung der Außenhaut zu verspannen, wobei hierfür eine elastische Vorspannung des Karosserieteils verwendet wird. Die Haltekraft wird dadurch erhöht, daß für eine formschlüssige Verankerung des Montageteils in der Vertiefung gesorgt wird, beispielsweise durch Verankerungsvorsprünge, die an dem Montageteil vorhanden sind und sich in die Außenhaut des Karosserieteils eindrücken. Durch die Positionierung des Montageteils in der Vertiefung ergeben sich außerdem geringere Toleranzen. Die Innenschicht besteht aus einem geschäumten Kunststoff, der ggf. noch mit Verstärkungsfasern versehen ist, beispielsweise mit Glasfasern. Der besondere Vorteil dabei besteht darin, daß der beim Schäumen der Innenschicht entstehende Schäumdruck dafür verwendet werden kann, die Außenhaut fest gegen das Montageteil zu drücken und dabei die Außenhaut so zu verformen, daß das Montageteil formschlüssig aufgenommen ist.

Als Montageteil ist insbesondere eine Schiene geeignet, beispielsweise ein extrudiertes Aluminiumprofil, das auf seiner Außenfläche mit mehreren Verankerungsvorsprüngen versehen ist. Die Verankerungsvorsprünge dienen zur formschlüssigen Verankerung des Montageteils in der Außenhaut. Als Montageteil kann beispielsweise auch ein Gewindestück eingesetzt werden, das beispielsweise als Fußteil einer Dachantenne dient.

Als Montageteil ist auch ein zweites Karosserieteil geeignet, das mit einem abgebogenen Rand versehen ist, der in der Vertiefung des ersten Karosserieteils aufgenommen ist. Auf diese Weise können Baugruppen hergestellt werden, die einerseits in vorteilhafter Weise aus tiefgezogenen Teilen aus Kunststoff bestehen und andererseits Abmessungen aufweisen, die in einem Stück aus Kunststoff nicht realisierbar wären.

Vorzugsweise ist vorgesehen, daß die Vertiefung in der Außenhaut einen rechteckigen Querschnitt aufweist und das Montageteil vollständig in der Vertiefung aufgenommen ist. Dies ermöglicht es, bei Bedarf an dem Montageteil ein Anbauteil zu befestigen, beispielsweise eine Dachreling, wobei das Montageteil aufgrund seiner versenkten Anordnung dann nicht störend auffällt, wenn kein Anbauteil vorgesehen ist. In diesem Fall kann eine Abdeckung aufgesetzt werden, die bündig mit der Außenfläche der Außenhaut abschließt.

Es kann auch vorgesehen sein, das Montageteil bündig mit der Außenfläche der Außenhaut abschließen zu lassen und die Oberseite des Montageteils an die Krümmung der Außenhaut anzupassen, so daß die Außenkontur optisch nicht unterbrochen ist.

Im Hinblick auf die notwendige Verformbarkeit der Außenhaut ist es vorteilhaft, wenn die Außenhaut aus Kunststoff besteht. Trotz der Verformbarkeit der Außenhaut ist die Festigkeit des Karosserieteils in jedem Falle ausreichend, da die Innenschicht für die notwendige Festigkeit sorgt.

Wenn für die Außenhaut Kunststoff verwendet wird, kann die Vertiefung in der Außenhaut auch mit einem Hinterschnitt ausgeführt werden, hinter dem das Montageteil von sich aus einrastet. Nach dem Aufbringen der Innenschicht ist der Halt des Montageteils in der Außenhaut weiter verbessert. Ein solcher Hinterschnitt kann ohne große Probleme entformt werden, da der Kunststoff die erforderliche Nachgiebigkeit hat, um die Außenhaut trotz des Hinterschnitts aus der Form zu entnehmen.

Das erfindungsgemäße Karosserieteil kann insbesondere ein Dachmodul sein. Das Montageteil ermöglicht es dann, die verschiedenen Anbauteile, die an einem Dachmodul angebracht werden können, in einfacher Weise anzubringen.

Erfindungsgemäß ist auch ein Verfahren zur Herstellung eines Karosserieteils geschaffen, insbesondere eines Dachmoduls. Bei diesem Verfahren wird zuerst eine Außenhaut bereitgestellt, die eine Vertiefung aufweist. Dann wird in die Vertiefung ein Montageteil eingelegt. Anschließend wird die Außenhaut mit dem Montageteil in ein Schäumwerkzeug eingelegt, und auf die Rückseite der Außenhaut wird eine Innenschicht aufgeschäumt, wobei der dabei entstehende Schäumdruck die Außenhaut fest gegen das Montageteil drückt, so daß diese fest in der Vertiefung verankert ist. Dieses Verfahren nutzt den bei der Herstellung von Karosserieteilen mit einer geschäumten Komponente ohnehin entstehenden Schäumdruck, um das Montageteil an der Außenhaut zu befestigen. Somit sind keine zusätzlichen Verfahrensschritte erforderlich, was zu geringen Verfahrenskosten führt.

Die Außenhaut kann insbesondere tiefgezogen werden, um die Vertiefung für die Aufnahme des Montageteils zu erhalten. Auf diese Weise kann die erforderliche Vertiefung sehr kostengünstig hergestellt werden, beispielsweise in einem Schritt mit der sowieso erforderlichen Formgebung der Außenhaut.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen, abgebrochenen Schnittansicht eine Außenhaut für ein Karosserieteil gemäß einer ersten Ausführungsform der Erfindung;
- Figur 2 in einer schematischen, abgebrochenen Schnittansicht die Außenhaut von Figur 1 eingelegt in ein Schäumwerkzeug und versehen mit einem Montageteil;
- Figur 3 in einer schematischen, abgebrochenen Schnittansicht das fertige Karosserieteil gemäß der ersten Ausführungsform;
- Figur 4 in einer schematischen, abgebrochenen Schnittansicht eine Außenhaut für ein Karosserieteil gemäß einer zweiten Ausführungsform der Erfindung; und
- Figur 5 in einer schematischen, abgebrochenen Schnittansicht das fertige Karosserieteil gemäß der zweiten Ausführungsform.

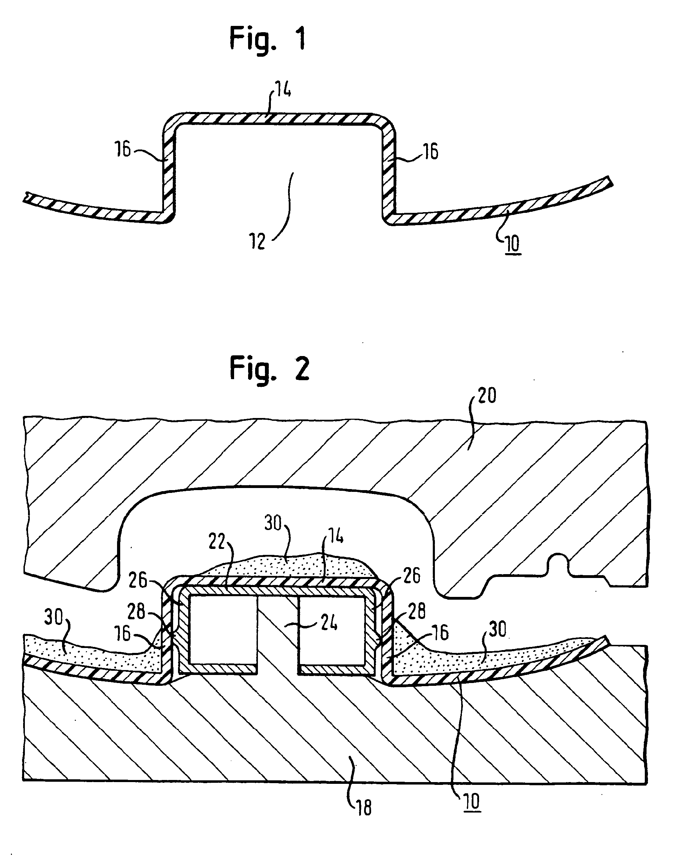

In Figur 1 ist eine Außenhaut 10 gemäß einer ersten Ausführungsform gezeigt, die später die Außenhaut eines Dachmoduls für ein Kraftfahrzeug bildet. Die Außenhaut 10 besteht aus Kunststoff und ist tiefgezogen worden, so daß eine Vertiefung 12 mit einem Boden 14 und zwei Seitenwänden 16 gebildet ist.

In Figur 2 ist die Außenhaut von Figur 1 zu sehen, die in ein Schäumwerkzeug eingelegt ist, das aus einem Unterteil 18 und einem Oberteil 20 besteht. In die Vertiefung 12 ist ein Montageteil 22 eingelegt, das hier eine Schiene aus Aluminium mit rechteckigem Querschnitt ist. Das Montageteil 22 liegt mit einer Seite flächig am Boden 14 der Vertiefung 12 an. Auf seiner gegenüberliegenden Seite ist das Montageteil 22 geschlitzt, so daß später ein zu verankerndes Anbauteil in das Montageteil 22 eingesetzt werden kann. Zur Fixierung des Montageteils 22 ist das Unterteil 18 der Schäumform mit einem Steg 24 versehen, der durch die geschlitzte Seite des Montageteils in dessen Innenraum hineinragt. Das Montageteil ist an seinen den Seitenwänden 16 der Vertiefung gegenüberliegenden Seitenflächen 26 mit mehreren Verankerungsvorsprünge 28 versehen, die als eine Vielzahl von einzelnen Erhebungen ausgeführt sind. Wie in Figur 2 zu sehen ist, liegt das Montageteil 22 lediglich mit seinen Verankerungsvorsprüngen 28 an den Seitenwänden 16 der Vertiefung 12 an.

Auf die Seite der Außenhaut 10, die später dem Fahrzeuginnenraum zugewandt ist, ist ein schäumbares Kunststoffmaterial 30 aufgebracht, das später aushärtet.

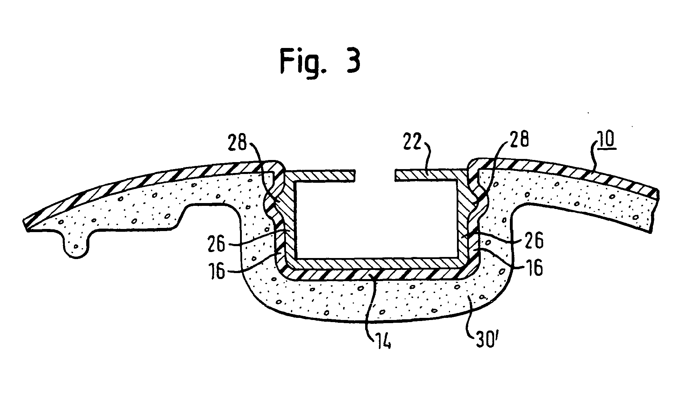

Nach dem Aufbringen des schäumbaren Kunststoffmaterials 30 wird die Schäumform geschlossen, so daß aufgrund der Volumenzunahme des schäumbaren Kunststoffmaterials 30 der Innendruck in der Schäumform ansteigt. Dabei drückt der Schäumdruck den Boden 14 und die Seitenwände 16 der Vertiefung der Außenhaut fest gegen das Montageteil 22, das jedoch aufgrund seiner Festigkeit sowie der Unterstützung durch den Steg 24 nicht nachgibt. Der Schäumdruck sorgt jedoch dafür, daß die Seitenwände 16 der Vertiefung 12 sich flächig an die Seitenflächen 26 des Montageteils 22 anlegen, sich also so verformen, daß die Verankerungsvorsprünge 28 von ihnen aufgenommen werden und der Zwischenraum zwischen den Seitenflächen 26 des Montageteils und der Außenhaut verschwinden. Dies ist in Figur 3 zu sehen, in der das fertige Dachmodul gezeigt ist. Das schäumbare Kunststoffmaterial ist ausgehärtet und bildet eine Innenschicht 30', die aufgrund ihrer Festigkeit gewährleistet, daß die Außenhaut 10 im Bereich der Vertiefung 12 fest am Montageteil 22 anliegt, insbesondere an dessen Seitenflächen 26 mit den Verankerungsvorsprüngen 28. Auf diese Weise ist das Montageteil 22 formschlüssig an dem Karosserieteil verankert, so daß Anbauteile angebracht werden können. Wenn keine Anbauteile verwendet werden, kann eine Abdeckung angebracht werden, die bündig mit der Außenseite der Außenhaut abschließt, so daß sich ein optisch ansprechendes Erscheinungsbild ergibt.

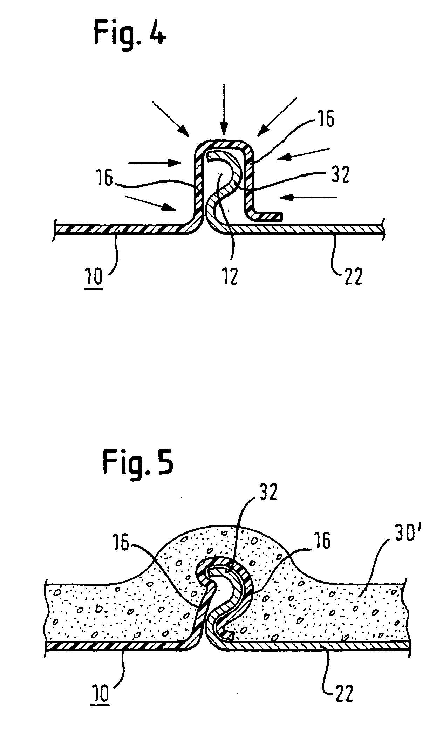

In den Figuren 4 und 5 ist eine zweite Ausführungsform der Erfindung gezeigt. Für die von der ersten Ausführungsform bekannten Bauteile werden dieselben Bezugszeichen verwendet, und es wird insoweit auf die obigen Erläuterungen verwiesen.

Der wesentlichsten Unterschied zwischen der ersten und der zweiten Ausführungsform besteht darin, daß bei der zweiten Ausführungsform das Montageteil kein Bauteil ist, das zur Montage anderer Teile dient, sondern selbst ein Karosserieteil ist, das unmittelbar am ersten Karosserieteil montiert wird. Dies ermöglicht, große Bauteile aus Kunststoff zu erhalten, die nicht einstückig gefertigt werden können, beispielsweise weil sie aufgrund ihrer Geometrie nicht tiefgezogen werden können oder weil sie abschnittsweise unterschiedliche Farben haben sollen.

Wie in Figur 4 zu sehen ist, ist die Außenhaut 10 mit einer Vertiefung 12 versehen, die einen rechteckigen Querschnitt hat, wobei die Vertiefung tiefer als breit ist. Das Montageteil 22 weist einen Randabschnitt 32 auf, der in der Art eines Fragezeichens gekrümmt ist. Der Randabschnitt 32 ist in der Vertiefung 12 angeordnet.

Beim Aushärten des schäumbaren Kunststoffmaterials wird auf den die Vertiefung 12 umgebenden Abschnitt der Außenhaut 10 ein Schäumdruck ausgeübt (in Figur 4 durch die Pfeile angedeutet). Dadurch legen sich insbesondere die Seitenwände 16 des die Vertiefung 12 umgebenden Abschnittes der Außenhaut 10 an den Randabschnitt 32 an (siehe Figur 5), so daß der Randabschnitt 32 formschlüssig in der Vertiefung gehalten ist.

### Bezugszeichenliste:

- 10:: Außenhaut
- 12:: Vertiefung
- 14:: Boden
- 16:: Seitenwand
- 18:: Unterteil
- 20:: Oberteil
- 22:: Montageteil
- 24:: Steg
- 26:: Seitenfläche
- 28:: Verankerungsvorsprung
- 30:: schäumbares Kunststoffmaterial
- 30':: Innenschicht
- 32:: Randabschnitt

## Patentansprüche

1. Karosserieteil für ein Fahrzeug, mit einer Außenhaut (10), die aus einem zumindest teilweise verformbaren Material besteht, einer Innenschicht (30'), die aus einem geschäumten Kunststoff besteht, und einem Montageteil (22), das in eine Vertiefung (12) der Außenhaut (10) eingelegt ist, **dadurch gekennzeichnet, daß** die Innenschicht (30') die Außenhaut (10) im Bereich der Vertiefung (12) fest gegen das Montageteil (22) drückt, so daß das Montageteil dort formschlüssig verankert ist.

2. Karosserieteil nach Anspruch 1, **dadurch gekennzeichnet, daß** die Innenschicht (30') mit Glasfasern verstärkt ist.

3. Karosserieteil nach einem der vorhergehenden Ansprüche, **dadurch gekennzeichnet, daß** das Montageteil (22) mindestens einen Verankerungsvorsprung (28) aufweist, an dem die Außenhaut (10) eng anliegt.

4. Karosserieteil nach einem der vorhergehenden Ansprüche, **dadurch gekennzeichnet, daß** das Montageteil (22) eine Schiene ist, die auf ihrer Außenfläche mit mehreren Verankerungsvorsprüngen (28) versehen ist.

5. Karosserieteil nach Anspruch 4, **dadurch gekennzeichnet, daß** die Schiene ein extrudiertes Aluminiumteil ist.

6. Karosserieteil nach einem der vorhergehenden Ansprüche, **dadurch gekennzeichnet, daß** die Vertiefung (12) einen rechteckigen Querschnitt aufweist und das Montageteil (22) vollständig in der Vertiefung aufgenommen ist.

7. Karosserieteil nach einem der vorhergehenden Ansprüche, **dadurch gekennzeichnet, daß** das Montageteil (22) auf der von der Innenschicht (30') abgewandten Seite der Außenhaut (10) zugänglich ist.

8. Karosserieteil nach einem der vorhergehenden Ansprüche, **dadurch gekennzeichnet, daß** die Außenhaut (10) aus Kunststoff besteht.

9. Karosserieteil nach einem der vorhergehenden Ansprüche, **dadurch gekennzeichnet, daß** das Karosserieteil ein Dachmodul ist.

10. Karosserieteil nach einem der vorhergehenden Ansprüche, **dadurch gekennzeichnet, daß** das Montageteil (22) ein zweites Karosserieteil ist, das in die Vertiefung (12) des ersten Karosserieteils eingreift und dort fest verankert ist.

11. Karosserieteil nach Anspruch 10, **dadurch gekennzeichnet, daß** das zweite Karosserieteil (22) einen Randabschnitt (32) aufweist, der doppelt gekrümmt ist und in die Vertiefung des ersten Karosserieteils eingreift.

12. Verfahren zur Herstellung eines Karosserieteils, insbesondere eines Dachmoduls, mittels der folgenden Schritte:
- es wird eine Außenhaut (10) bereitgestellt, die eine Vertiefung (12) aufweist;
- in die Vertiefung (12) wird ein Montageteil (22) eingelegt;
- die Außenhaut (10) mit dem Montageteil (22) wird in ein Schäumwerkzeug (18, 20) eingelegt;
- auf die Rückseite der Außenhaut (10) wird eine Innenschicht (30') aufgeschäumt, wobei der dabei entstehende Schäumdruck die Außenhaut (10) fest gegen das Montageteil (22) drückt, so daß diese fest in der Vertiefung (12) verankert ist.

13. Verfahren nach Anspruch 12, **dadurch gekennzeichnet, daß** die Außenhaut (10) tiefgezogen wird, um die Vertiefung (12) zu erhalten.

## Claims

1. A car body part for a motor vehicle, comprising an outer skin (10) which consists of an at least partially deformable material, an inner layer (30') which consists of foamed plastics, and a mounting part (22) which is placed in a recess (12) of the outer skin (10), **characterised in that** in the region of the recess (12) the inner layer (30') strongly presses the outer skin (10) against the mounting part (22), so that the mounting part is anchored there by means of an interlocking fit.

2. The car body part according to claim 1, **characterised in that** the inner layer (30') is reinforced with glass fibres.

3. The car body part according to any of the preceding claims, **characterised in that** the mounting part (22) has at least one anchoring protrusion (28) with which the outer skin (10) has a snug fit.

4. The car body part according to any of the preceding claims, **characterised in that** the mounting part (22) is a rail which is provided with a plurality of anchoring protrusions (28) on its outer surface.

5. The car body part according to claim 4, **characterised in that** the rail is an extruded aluminium part.

6. The car body part according to any of the preceding claims, **characterised in that** the recess (12) has a rectangular cross-section and the mounting part (22) is fully received in the recess.

7. The car body part according to any of the preceding claims, **characterised in that** the mounting part (22) is accessible from the side of the outer skin (10) facing away from the inner layer (30').

8. The car body part according to any of the preceding claims, **characterised in that** the outer skin (10) is made of plastics.

9. The car body part according to any of the preceding claims, **characterised in that** the car body part is a roof module.

10. The car body part according to any of the preceding claims, **characterised in that** the mounting part (22) is a second car body part which engages in the recess (12) of the first car body part and is firmly anchored there.

11. The car body part according to claim 10, **characterised in that** the second car body part (22) has an edge portion (32) which has a double curvature and engages in the recess of the first car body part.

12. A method of producing a car body part, in particular a roof module, by means of the following steps:
- an outer skin (10) is provided which has a recess (12);
- a mounting part (22) is placed in the recess (12);
- the outer skin (10) including the mounting part (22) is placed in a foaming tool (18, 20);
- an inner layer (30') is applied on the rear side of the outer skin (10) by a foaming process, with the foaming pressure generated in this process strongly pressing the outer skin (10) against the mounting part (22) so that the latter is firmly anchored in the recess (12).

13. The method according to claim 12, **characterised in that** the outer skin (10) is deep-drawn in order to obtain the recess (12).

## Revendications

1. Pièce de carrosserie pour un véhicule, comprenant une peau extérieure (10) en une matière au moins partiellement déformable, une couche intérieure (30') en une matière plastique moussée, et une pièce de montage (22) placée dans un évidement (12) de la peau extérieure (10), **caractérisée en ce que** dans la région de l'évidement (12), la couche intérieure (30') presse la peau extérieure (10) fermement contre la pièce de montage (22), de sorte qu'à cet endroit, la pièce de montage est ancrée par coopération de formes.

2. Pièce de carrosserie selon la revendication 1, **caractérisée en ce que** la couche intérieure (30') est renforcée par des fibres de verre.

3. Pièce de carrosserie selon l'une des revendications précédentes, **caractérisée en ce que** la pièce de montage (22) comprend au moins une saillie d'ancrage (28), contre laquelle se colle la peau extérieure (10).

4. Pièce de carrosserie selon l'une des revendications précédentes, **caractérisée en ce que** la pièce de montage (22) est un rail pourvu de plusieurs saillies d'ancrage (28) sur sa face extérieure.

5. Pièce de carrosserie selon la revendication 4, **caractérisée en ce que** le rail est une pièce en aluminium extrudée.

6. Pièce de carrosserie selon l'une des revendications précédentes, **caractérisée en ce que** l'évidement (12) présente une section transversale rectangulaire et **en ce que** la pièce de montage (22) est entièrement reçue dans l'évidement.

7. Pièce de carrosserie selon l'une des revendications précédentes, **caractérisée en ce que** la pièce de montage (22) est accessible depuis le côté de la peau extérieure (10) détourné de la couche intérieure (30').

8. Pièce de carrosserie selon l'une des revendications précédentes, **caractérisée en ce que** la peau extérieure (10) est en matière plastique.

9. Pièce de carrosserie selon l'une des revendications précédentes, **caractérisée en ce que** la pièce de carrosserie est un module de toit.

10. Pièce de carrosserie selon l'une des revendications précédentes, **caractérisée en ce que** la pièce de montage (22) est une deuxième pièce de carrosserie qui s'engage dans l'évidement (12) de la première pièce de carrosserie et est ancrée de manière fixe à cet endroit.

11. Pièce de carrosserie selon la revendication 10, **caractérisée en ce que** la deuxième pièce de carrosserie (22) comprend une portion de bord (32) qui est coudée deux fois et s'engage dans l'évidement de la première pièce de carrosserie.

12. Procédé pour la fabrication d'une pièce de carrosserie, en particulier d'un module de toit, à l'aide des étapes suivantes:
- il est prévu une peau extérieure (10) qui comprend un évidement (12);
- une pièce de montage (22) est placée dans l'évidement (12);
- la peau extérieure (10), avec la pièce de montage (22), est placée dans un outil de moussage (18, 20);
- une couche intérieure (30') est moussée sur la face postérieure de la peau extérieure (10), la pression de moussage ainsi produite pressant la peau extérieure (10) fermement contre la pièce de montage (22), de telle sorte que cette dernière est ancrée de manière fixe dans l'évidement (12).

13. Procédé selon la revendication 12, **caractérisée en ce que** la peau extérieure (10) est emboutie pour obtenir l'évidement (12).
